(19) Europäisches Patentamt

European Patent Office

Office européen des brevets

(11) Veröffentlichungsnummer: **0 337 155 B1**

(12) **EUROPÄISCHE PATENTSCHRIFT**

(45) Veröffentlichungstag der Patentschrift: **23.12.92**

(21) Anmeldenummer: **89104852.2**

(22) Anmeldetag: **17.03.89**

(51) Int. Cl.⁵: **B60R 16/02**, H02J 7/14

(54) **Bordnetz für ein Kraftfahrzeug.**

(30) Priorität: **15.04.88 DE 3812577**

(43) Veröffentlichungstag der Anmeldung:
**18.10.89 Patentblatt 89/42**

(45) Bekanntmachung des Hinweises auf die
Patenterteilung:
**23.12.92 Patentblatt 92/52**

(84) Benannte Vertragsstaaten:
**DE FR GB IT**

(56) Entgegenhaltungen:
**EP-A- 0 232 828**
**DE-A- 3 007 941**
**GB-A- 1 585 915**
**US-A- 4 045 718**
**US-A- 4 604 565**

(73) Patentinhaber: **ROBERT BOSCH GMBH**
**Postfach 30 02 20**
**W-7000 Stuttgart 30(DE)**

(72) Erfinder: **Frister, Manfred, Dip.-Ing.**
**Im Wolfsgalgen 29**
**W-7141 Schwieberdingen(DE)**
Erfinder: **Meyer, Friedhelm, Dipl.-Ing.**
**Falkenstrasse 29**
**W-7132 Illingen(DE)**

EP 0 337 155 B1

## Beschreibung

Stand der Technik

Die Erfindung geht aus von einem Bordnetz für ein Kraftfahrzeug nach der Gattung des Hauptanspruchs.

Die Erzeugung elektrischer Energie für ein Kraftfahrzeugbordnetz erfolgt gewöhnlich mit einem Drehstromgenerator dessen Ausgangsspannung mit einem Spannungsregler auf den für die Spannungsversorgung des Bordnetzes erforderlichen Wert geregelt wird. Als Energiespeicher dient dabei eine Batterie, die jedoch oft den an sie gestellten Anforderungen nicht entspricht. Es sind daher Kraftfahrzeugbordnetzsysteme vorgeschlagen worden, die zwei in Serie geschaltete Batterien aufweisen, die wiederum von einem oder von zwei Generatoren mit elektrischer Energie versorgt werden.

Aus der DE-OS 33 09 856 ist ein Gleichstrom-Bordnetzsystem für ein Fahrzeug bekannt, in dem ein Wechselstromgenerator mit zwei magnetisch voneinander getrennten Feldwicklungen und zugehörigen Ankerwicklungen über zwei Gleichrichtersysteme zwei Speicherbatterien, die in Serie geschaltet sind, mit elektrischer Energie versorgt. Dabei wird die Spannung mittels zweier Spannungsregler so geregelt, daß die an den beiden Batterien anliegende Spannung jeweils denselben Wert, im Ausführungsbeispiel der DE-OS 33 09 856 jeweils 12 Volt beträgt. Da die beiden Batterien in Serie geschaltet sind, kann zwischen der einen Klemme der ersten Batterie und der anderen Klemme der zweiten Batterie die Summe der beiden Batteriespannungen abgegriffen werden, im genannten Ausführungsbeispiel also 24 Volt.

Ein Bordnetzsystem gemäß der Offenlegungsschrift DE-OS 33 09 856 hat jedoch den Nachteil, daß die beiden Batterien dieselbe Nennspannung aufweisen, für einige Verbraucher wäre es günstiger, wenn man sie direkt an eine einzige Batterie mit höherer Nennspannung anschließen könnte, statt an die Serienschaltung zweier Batterien.

Aus der US-PS 4 045 718 ist ein weiteres Bordnetz bekannt, bei dem zwei Batterien miteinander in Serie geschaltet sind. Die Nennspannung dieser Batterien beträgt im Ausführungsbeispiel jeweils 12 Volt, es wird jedoch auch erwähnt, daß Batterien mit unterschiedlichen Nennspannungen verwendbar seien. Der Starter ist bei diesem bekannten Bordnetz mit dem Minuspol der einen Batterie und mit dem Pluspul der anderen Batterie verbunden, so daß er an der höchstmöglichen Spannung liegt, bei der Serienschaltung von zwei 12 Volt-Batterien also an insgesamt 24 Volt.

Das bekannte Bordnetz hat jedoch den Nachteil, daß der Starter während des Startvorgangs beide Batterien belastet, daher werden sämtliche im Kraftfahrzeug vorhandenen Verbraucher beeinträchtigt.

Ein weiteres, aus der DE-OS 30 07 941 bekanntes Bordnetz, das ebenfalls die Reihenschaltung von zwei 12 Volt-Batterien aufweist und bei dem der Starter ebenfalls mit dem Pluspol der einen und dem Minuspul der anderen Batterie verbunden ist, weist denselben Nachteil wie das aus der US-PS 4 045 718 bekannte Bordnetz auf.

Vorteile der Erfindung

Das erfindungsgemäße Bordnetz für ein Kraftfahrzeug mit den kennzeichnenden Merkmalen des Hauptanspruchs hat demgegenüber den Vorteil, daß durch die Verwendung zweier Generatoren bzw. Batterien mit unterschiedlicher Nennspannung die Verbraucher entsprechend ihrem Spannungsbedarf wahlweise an die Batterie mit der geeigneteren Nennspannung angeschlossen werden können. Durch die Serienschaltung der beiden Batterien mit unterschiedlicher Nennspannung kann darüber hinaus als Summe der beiden unterschiedlichen Einzelspannungen direkt eine dritte Spannung abgegriffen werden.

Da der Pluspol der einen Batterie, der mit dem Minuspol der anderen Batterie verbunden ist, auf Masse liegt, können den Verbrauchern positive und negative Spannungen zur Verfügung gestellt werden, wobei je nach Bedarf der Absolutwert der positven oder der negativen Spannung höher ist.

Da die Wahl der Nennspannung der beiden Generatoren bzw. der beiden Batterien weitgehend frei erfolgen kann, kann sie entsprechend den jeweiligen Erfordernissen erfolgen. Eine optimale Ladung der beiden Batterien ist durch den Einsatz zweier Generatoren auch bei ungleichmäßiger Bordnetzbelastung möglich.

Durch die in den Unteransprüchen aufgeführten Maßnahmen sind vorteilhafte Weiterbildungen und Verbesserungen des erfindungsgemäßen Bordnetzes für ein Kraftfahrzeug möglich. Insbesondere können spannungsempfindliche Bauteile, beispielsweise für die Zündung und/oder Einspritzung an der einen Batterie und der Starter an der anderen Batterie, mit der höheren Spannung angeschlossen werden, womit der Spannungseinbruch beim Start die spannungsempfindlichen Bauteile nicht stört.

Zeichnung

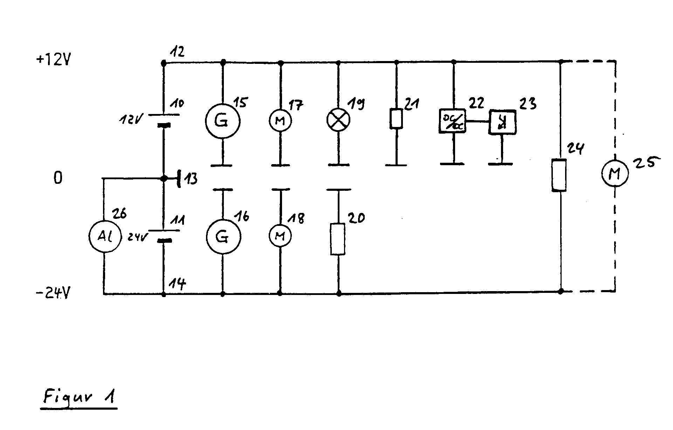

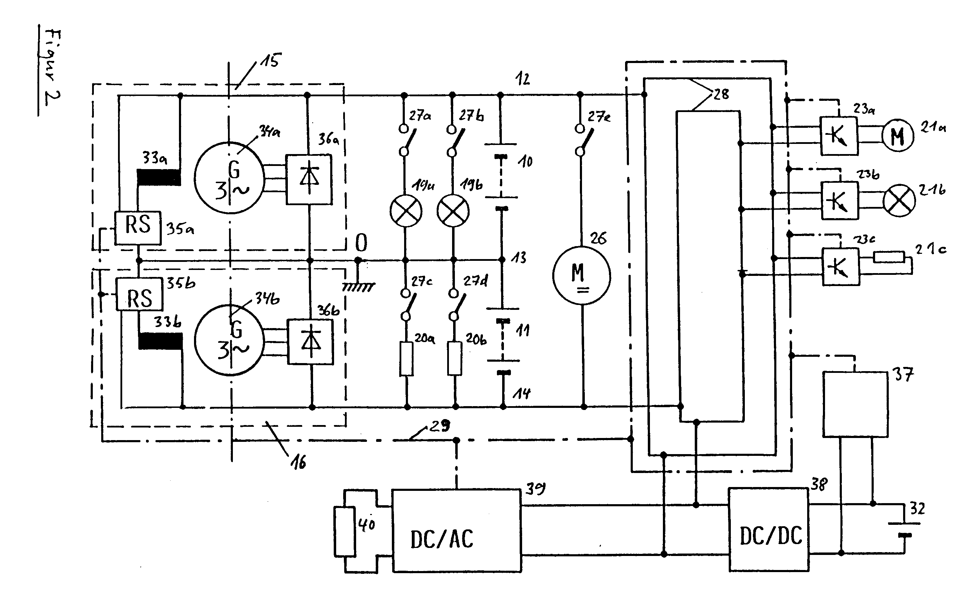

Ein Ausführungsbeispiel der Erfindung ist in der Figur 1 dargestellt und wird in der nachfolgenden Beschreibung näher erläutert. In Figur 2 ist ein zweites Ausführungsbeispiel der Erfindung aufgezeigt, das einige Details des Bordnetzes zeigt. Die in Figur 1 verwendeten Bezugszeichen werden in Figur 2 für entsprechende Elemente wieder verwendet.

Beschreibung der Ausführungsbeispiele

In Figur 1 ist schematisch ein Bordnetz für ein Kraftfahrzeug dargestellt. Zwei Batterien 10 und 11 sind miteinander in Serie geschaltet, wobei die negative Klemme der Batterie 10 und die positive Klemme der Batterie 11 miteinander verbunden sind. Der Pluspol der Batterie 10 ist mit einem Spannungsabgriff bzw. Spannungsanschluß 12 verbunden, der Minuspol der Batterie 10 bzw. der Pluspol der Batterie 11 mit einem Spannungsabgriff 13 bzw. mit Masse und der Pluspol der Batterie 11 mit einem Spannungsabgriff 14. Zwischen Klemme 12 und Masse sind ein erster Generator 15, ein erster Motor 17, beispielsweise die Kraftstoffpumpe, eine erste Lampe 19, ein Verbraucher 21, der beispielsweise die für Zündung und/oder Einspritzung wesentliche Bauteile repräsentiert sowie ein Gleichspannungswandler 22 geschaltet. Zwischen den Spannungswandler 22 und Masse sind elektronische Bauelemente 23 angeschlossen. Zwischen die Spannungsklemme 14 und Masse ist ein zweiter Generator 16, ein zweiter Motor 18, beispielsweise der Scheibenwischermotor sowie weitere Verbraucher 20 geschaltet. An die Klemmen 12 und 14 ist ein weiterer Verbraucher 24 sowie gegebenenfalls ein zusätzlicher Motor 25, beispielsweise das Gebläse angeschlossen.

Der Starter 26 wird von der Batterie 11 über die Spannungsanlüsse 13 und 14 mit Spannung versorgt. Im Ausführungsbeispiel nach Figur 1 hat die Batterie 10 bzw. der Generator 15 eine Nennspannung von 12 Volt, die Batterie 11 bzw. der Generator 16 haben eine Nennspannung von 24 Volt.

Im ersten Ausführungsbeispiel nach Figur 1 wird der Starter 26, der Motor 18 sowie ein Verbraucher 20 mit einer Spannung von 24 Volt betrieben, dabei ist der Motor 18 ein Leistungsverbraucher, beispielsweise ein Motor für die Wasserpumpe oder die Ölpumpe, die Verbraucher 20 sind spannungsunempfindliche Verbraucher mit hoher Leistungsaufnahme, beispielsweise Sitzheizungen, heizbare Heckscheibe usw. Für diese Motoren bzw. Verbraucher ist es unerheblich, wenn im Startfall infolge der großen Leistungsaufnahme des Starters die Batteriespannung der Batterie 11 zeitweilig stark absinkt.

Zwischen die Klemmen 12 und 14, im Ausführungsbeispiel also an 36 Volt können weitere spannungsunempfindliche Verbraucher, die möglichst hohe Spannung benötigen, vorzugsweise heizbare Frontscheiben oder auch zusätzliche Motoren 25, die während des Startvorgangs nicht in Betrieb sind, geschaltet werden.

Die Batterie 10 in Ausführungsausbeispiel 1 ist eine Batterie mit 12 Volt Nennspannung, sie versorgt die spannungsempfindlichen Bauelemente wie Glühlampen, Kleinverbraucher, Spannungswandler und über die Spannungswandler auch elektronische Bauelemente mit der erforderlichen konstanten Spannung. Da der Starter nicht von der Batterie 10 mit Leistung versorgt wird, treten für die an die Batterie 10 angeschlossenen Verbraucher im Startfall keinerlei Probleme bezüglich eines Spannungseinbruchs auf. Daher werden die für Zündung und Einspritzung wesentlichen Bauteile mit der Batterie 10 (12 Volt Nennspannung) verbunden, in Figur 1 werden diese Bauteile durch den Verbraucher 21 repräsentiert.

Die Verbraucher, die mit 12 Volt bzw. mit 24 Volt versorgt werden, können einseitig an Masse liegen. Die in Figur 1 dargestellten 36 Volt-Verbraucher 24 und 25 müssen dagegen beidpolig von Masse isoliert sein.

Die Batterien 10 und 11 können entsprechend ihrer Aufgabe ausgewählt bzw. dimensioniert werden, die 12 Volt Batterie 10 soll nur das Bordnetz versorgen, d.h. eine Auslegung für hohe Ströme bei Kälte entfällt. Die 24 Volt Batterie kann dagegen so ausgelegt werden, daß optimale Kaltstart- und Bordnetzversorgung gewährleistet sind, sie soll daher im Gegensatz zur Batterie 10 für eine Hochstrombelastung ausgelegt werden.

Prinzipiell ist auch ein Tausch der Spannungen möglich in diesem Fall würde Anschluß 12 auf minus 12 Volt liegen Anschluß 13 weiterhin auf Masse und Anschluß 14 auf plus 24 Volt.

Statt der Kombination aus einer 12 Volt und einer 24 Volt Batterie mit den entsprechenden 12 Volt und 24 Volt Generatoren sind beliebige andere Kombinationen möglich, beispielsweise 12 Volt und 36 Volt, so daß auch eine Spannung von 48 Volt als Spannungssumme der Serienschaltung der beiden Batterien abgegriffen werden kann. Auch eine Verwendung von drei Generatoren und drei Batterien kann erfolgen.

Figur 2 zeigt ein zweites Ausführungsbeispiel eines Bordnetzes für ein Kraftfahrzeug, das einige Details zeigt, die im Ausführungsbeispiel nach Figur 1 nicht explizit dargestellt wurden. Zwei Batterien 10 und 11 mit den Anschlußklemmen 12, 13 und 14 sind in Serie geschaltet. Zwischen die Klemmen 12 und 13 ist ein erster Generator 15, der die Batterie 10 mit Spannung versorgt geschaltet, zwischen die Klemmen 13 und 14 ein zweiter Generator 16, der die Batterie 11 mit Spannung versorgt. An die erste Batterie 10 sind über Schalter 27a und 27b zwei Glühlampen 19a und 19b an die Anschlußklemmen 12 und 13 angeschlossen. An die Batterie 11 sind Verbraucher 20a und 20b über Schalter 27c und 27d mit den Klemmen 13 und 14 verbunden. Die Anschlußklemme 13 ist weiterhin mit Masse verbunden. Über einen weiteren Schalter 27e ist der Starter 26 mit der Klemme 12 der Batterie 10 und der Klemme 14 der Batterie 11 verbunden. Mit denselben Klemmen 12 und 14 ist ein Spannungsringnetz 28 z.B. Multiplex-Ringnetz verbunden, das über Bauelemente 23a, b, c Verbraucher 21a, b, c mit Spannung versorgt. Diese Bauelemente 23 werden mit Hilfe einer elektronischen Schaltung 37, die mit den Bauelementen 23a, b, c über eine Datenringleitung 29 verbunden ist, gesteuert. Die elektronische Schaltung 37 steuert weiterhin einen DC/DC-Wandler 38 sowie einen DC/AC-Wandler 39, die beide über das Ringnetz 28 mit Spannung versorgt werden. An den DC/AC-Wandler ist eine Heizscheibe 40 angeschlossen, die mit einer 80 Volt, 1 kHz-Wechselspannung betrieben wird. Der DC/DC-Wandler liefert eine 5 Volt Gleichspannung, die an einer Batterie 32 anliegt und die die elektronische Schaltung 37 mit Spannung versorgt. Statt über eine Spannungsringleitung kann die Spannungsversorgung der Verbraucher auch mittels eines Strahlen- oder Maschennetzes bewerkstelligt werden.

Bei diesem Ausführungsbeispiel liegt der Starter 26 an der Gesamtspannung, die zwischen den Klemmen 12 und 14 anliegt.

Über die Datenringleitung 29 sind die einzelnen Bauelemente der Schaltung untereinander verbunden und werden mit Hilfe der elektronischen Schaltung 37 gesteuert.

Die Generatoren 15 und 16 beider Ausführungsbeispiele sind Wechselstromgeneratoren, von denen einer beispielsweise als permanenterregter Generator ausgebildet ist und somit als "Grundlast-Generator" geeignet ist, und enthalten jeweils Feldwicklungen 33a, b und Ankerwicklungen 34a, b. Die Ausgangsspanung wird mittels zweier Regler 35a, 35b auf dem gewünschgten Wert gehalten. Die Ausgangsspanung wird jeweils in Gleichrichtersystemen 36a, b gleichgerichtet, bevor sie ins Bordnetz eingespeist wird.

Neben der Spannungserzeugung duch zwei einzelne Generatoren, die gegebenenfalls über eine Kupplung miteinander verbunden sind, ist es auch möglich einen Doppelgenerator mit zwei Systemen, beispielsweise 1x12 Volt und 1x24 Volt zu verwenden.

Ein Antrieb der zwei Generatoren kann über einen Multirippenriemen erfolgen, er reduziert damit die pro Generator erforderlichen Momente und verteilt die Riemenkräfte auf verschiedene Riemenabschnitte.

Auch ein Generator mit höherer Nennspannung, beispielsweise 36 Volt, der mittels einer elektronischen Schaltung (Symmetrierschaltung) beide Batterien, beispielsweise eine 12 Volt Batterie und eine 24 Volt Batterie mit Spannung versorgt, kann zur Spannungserzeugung eingesetzt werden.

## Patentansprüche

1. Bordnetz für ein Kraftfahrzeug mit zwei in Reihe geschalteten Batterien (10, 11), mit drei Spannungsabgriffen (12, 13, 14), mit einem ersten Generator (15), der der ersten Batterie (10) zugeordnet ist und mit einem zweiten Generator (16), der der zweiten Batterie (11) zuge- ordnet ist, mit Verbrauchern (17 bis 21, 24, 25) und mit elektroni- schen Bauelementen (23), die entweder der ersten Batterie (10) oder der zweiten Batterie (11) oder beiden Batterien zugeordnet sind sowie mit einem Starter (26), dadurch gekennzeichnet, daß an den drei Spannungsabgriffen (12, 13, 14) drei unterschiedliche Spannungen liegen, daß der Starter (26) an die Batterie (11) mit der höheren Nennspannung und die Zündung und/oder Einspritzung (21) an die andere Batterie angeschlossen ist und daß die Verbindung zwischen dem Pluspol der einen Batterie (11) und dem Minuspol der anderen Batterie (10) auf Masse liegt.

2. Bordnetz für ein Kraftfahrzeug nach Anspruch 1, dadurch gekennzeichnet, daß die Nennspannung der ersten Batterie 12 Volt und die der zweiten Batterie 24 Volt beträgt.

3. Bordnetz für ein Kraftfahrzeug nach Anspruch 1, dadurch gekennzeichnet, daß die Nennspannung der ersten Batterie 12 Volt und die der zweiten Batterie 36 Volt beträgt.

4. Bordnetz für ein Kraftfahrzeug nach Anspruch 2 oder 3, dadurch gekennzeichnet daß wenigstens ein weiterer Stromkreis mit eigenem Generator und eigener Batterie vorgesehen ist.

5. Bordnetz für ein Kraftfahrzeug nach einem der vorhergehenden Ansprüche, dadurch gekennzeichnet, daß zur Spannungserzeugung zwei einzelne, voneinander unabhängige Generatoren verwendet werden.

6. Bordnetz für ein Kraftfahrzeug nach einem der vorhergehenden Ansprüche, dadurch gekennzeichnet, daß zur Spannungserzeugung ein Doppelgenerator mit zwei Systemen, beispielsweise 12 Volt/24 Volt verwendet wird.

7. Bordnetz für ein Kraftfahrzeug nach Anspruch 1 oder 5, dadurch gekennzeichnet, daß der Antrieb der zwei Generatoren über einen Multirippenriemen erfolgt.

8. Bordnetz für ein Kraftfahrzeug nach einem der vorhergehenden Ansprüche, dadurch gekennzeichnet, daß eine Kombination der beiden Generatoren auf einer Welle in einem Gehäuse erfolgt.

9. Bordnetz für ein Kraftfahrzeug nach Anspruch 1 bis 8, dadurch gekennzeichnet, daß beide Generatoren über eine Kupplung miteinander verbunden sind.

10. Bordnetz für ein Kraftfahrzeug nach einem der vorhergehenden Ansprüche, dadurch gekennzeichnet, daß Spannungswandler (22, 23, 38, 39) die zur Erzeugung von weiteren Ausgangsspannungen dienen, mit wenigstens einer der Batterien (10, 11) in Verbindung stehen.

11. Bordnetz für ein Kraftfahrzeug nach einem der vorhergehenden Ansprüche, dadurch gekennzeichnet, daß an wenigstens eine der Batterien ein Ringnetz (28) zur Spannungsversorgung der Verbraucher angeschlossen ist.

12. Bordnetz für ein Kraftfahrzeug nach einem der vorhergehenden Ansprüche, dadurch gekennzeichnet, daß ein Strahlen- oder Maschennetz zur Spannungsversorgung der Verbraucher vorgesehen ist.

13. Bordnetz für ein Kraftfahrzeug nach einem der vorhergehenden Ansprüche, dadurch gekennzeichnet, daß die Batterie (11) mit der höheren Spannung für Hochstrombelastung durch den Starter (26) ausgelegt ist.

14. Bordnetz für ein Kraftfahrzeug nach einem der vorangehenden Ansprüche, dadurch gekennzeichnet, daß wenigstens einer der Generatoren als permanenterregter Generator ausgebildet ist.

15. Bordnetz für ein Kraftfahrzeug nach einem der vorhergehenden Ansprüche, dadurch gekennzeichnet, daß ein einziger Generator mit erhöhter Nennspannung, beispielsweise 36 Volt verwendet wird und mittels einer elektronischen Schaltung beide Batterien (10, 11) versorgt.

**Claims**

1. Electrical system for a motor vehicle with two series-connected batteries (10, 11), with three voltage taps (12, 13, 14), with a first generator (15) which is allocated to the first battery (10) and with a second generator (16) which is allocated to the second battery (11), with loads (17 to 21, 24, 25) and with electronic components (23) which are allocated either to the first battery (10) or to the second battery (11) or to both batteries, and with a starter (26), characterized in that three different voltages are present at the three voltage taps (12, 13, 14), in that the starter (26) is connected to the battery (11) having the higher rated voltage and the ignition and/or injection (21) is connected to the other battery, and in that the connection between the positive pole of one battery (11) and the negative pole of the other battery (10) is connected to earth.

2. Electrical system for a motor vehicle according to Claim 1, characterized in that the rated voltage of the first battery is 12 volts and that of the second battery is 24 volts.

3. Electrical system for a motor vehicle according to Claim 1, characterised in that the rated voltage of the first battery is 12 volts and that of the second battery is 36 volts.

4. Electrical system for a motor vehicle according to Claim 2 or 3, characterized in that at least one further circuit with its own generator and its own battery is provided.

5. Electrical system for a motor vehicle according to one of the preceding claims, characterized in that two individual mutually independent generators are used for voltage generation.

6. Electrical system for a motor vehicle according to one of the preceding claims, characterized in that a dual generator with two systems, for example 12 volts/24 volts, is used for voltage generation.

7. Electrical system for a motor vehicle according to Claim 1 or 5, characterized in that the two generators are driven via a multi-rib belt.

8. Electrical system for a motor vehicle according to one of the preceding claims, characterized in that the two generators are combined on one shaft in one housing.

9. Electrical system for a motor vehicle according to Claims 1 to 8, characterized in that the two generators are connected to one another via a clutch.

10. Electrical system for a motor vehicle according to one of the preceding claims, characterized in that voltage converters (22, 23, 38, 39), which are used for generating further output voltages, are connected to at least one of the batteries (10, 11).

11. Electrical system for a motor vehicle according to one of the preceding claims, characterized in that a ring system (28) is connected to at least one of the batteries for supplying the loads with voltage.

12. Electrical system for a motor vehicle according to one of the preceding claims, characterized in that a star or mesh system is provided for supplying the loads with voltage.

13. Electrical system for a motor vehicle according to one of the preceding claims, characterized in that the battery (11) having the higher voltage is designed for high-current loading by the starter (26).

14. Electrical system for a motor vehicle according to one of the preceding claims, characterized in that at least one of the generators is constructed as a permanently-excited generator.

15. Electrical system for a motor vehicle according to one of the preceding claims, characterized in that a single generator with increased rated voltage, for example 36 volts, is used and supplies both batteries (10, 11) by means of an electronic circuit.

**Revendications**

1. Réseau de bord pour un véhicule à moteur avec deux batteries (10, 11) montées en série, avec trois prises de tension (12, 13, 14), avec un premier générateur (15) qui est associé à la première batterie (10) et avec un deuxième générateur (16) qui est associé à la deuxième batterie (11), avec des appareils consommateurs d'électricité (17 à 21, 24, 25) et avec des composants électroniques (23), qui sont associés soit à la première batterie (10) soit à la seconde batterie (11) soit aux deux batteries ainsi qu'avec un démarreur (26), réseau de bord caractérisé en ce qu il y a sur les trois prises de tension (12, 13, 14) trois tensions différentes, en ce que le démarreur (26) est raccordé à la batterie (11) qui à la tension nominale la plus élevée et l'allumage et/ou l'injection (21) à l'autre batterie et en ce que la liaison entre le pôle plus de l'une des batteries (11) et le pôle moins de l'autre batterie (10) est à la masse.

2. Réseau de bord pour un véhicule à moteur selon la revendication 1, caractérisé en ce que la tension nominale de la première batterie est de 12 volts et la tension nominale de la deuxième batterie est de 24 volts.

3. Réseau de bord pour un véhicule à moteur selon la revendication 1, caractérisé en ce que la tension nominale de la première batterie est de 12 volts et celle de la deuxième batterie est de 36 volts.

4. Réseau de bord pour un véhicule à moteur selon la revendication 2 ou 3, caractérisé en ce qu au moins un autre circuit est prévu avec son propre générateur et sa propre batterie.

5. Réseau de bord pour un véhicule à moteur selon l'une des revendications précédentes, caractérisé en ce que l'on utilise pour produire la tension deux générateurs distincts indépendants l'un de l'autre.

6. Réseau de bord pour un véhicule à moteur selon l'une des revendications précédentes, caractérisé en ce que pour produire la tension, on utilise un double générateur à deux systèmes, par exemple 12 volts et 24 volts.

7. Réseau de bord pour un véhicule à moteur selon la revendication 1 ou 5, caractérisé en ce que l'entraînement des deux générateurs s'effectue au moyen d'une courroie à nervures multiples.

8. Réseau de bord pour un véhicule à moteur selon l'une des revendications précédentes, caractérisé en ce que l'on a une combinaison des deux générateurs sur un arbre dans un carter;

9. Réseau de bord pour un véhicule à moteur selon les revendications 1 à 8, caractérisé en ce que les deux générateurs sont reliés l'un à l'autre par un accouplement.

10. Réseau de bord pour un véhicule à moteur selon l'une des revendications précédentes, caractérisé en ce que les transformateurs de tension (22, 23, 38, 39) qui servent à produire d'autres tensions de sortie, sont au moins en liaison avec l'une des batteries (10, 11).

11. Réseau de bord pour un véhicule à moteur selon l'une des revendications précédentes, caractérisé en ce qu un réseau en boucle (28) est raccordé à au moins l'une des batteries pour l'alimentation en tension des appareils consommateurs d'électricité.

12. Réseau de bord pour un véhicule à moteur selon l'une des revendications précédentes, caractérisé en ce qu'il est prévu un réseau à structure radiale ou à mailles pour l'alimentation en tension des appareils consommateurs d'électricité.

13. Réseau de bord pour un véhicule à moteur selon l'une des revendications précédentes, caractérisé en ce que la batterie (11) est conçue avec la tension la plus élevée pour faire passer une forte intensité dans le démarreur (26).

14. Réseau de bord pour un véhicule à moteur selon l'une des revendications précédentes, caractérisé en ce qu'au moins l'un des générateurs est conçu comme un générateur excité en permanence.

15. Réseau de bord pour un véhicule à moteur selon l'une des revendications précédentes, caractérisé en ce qu'on utilise un seul générateur avec une tension nominale plus élevée, par exemple de 36 volts et on alimente les deux batteries (10, 11) au moyen d'un circuit électronique.

Figur 1

Figur 2